(19) Europäisches Patentamt
European Patent Office
Office européen des brevets

(11) **EP 3 383 087 B1**

(12) **EUROPEAN PATENT SPECIFICATION**

(45) Date of publication and mention
of the grant of the patent:
**04.03.2020 Bulletin 2020/10**

(51) Int Cl.:
*H04W 24/02* *(2009.01)*   *H04W 28/02* *(2009.01)*
*H04W 16/00* *(2009.01)*   *H04W 84/18* *(2009.01)*
*H04W 92/20* *(2009.01)*

(21) Application number: **17164009.7**

(22) Date of filing: **30.03.2017**

(54) **METHOD AND A SYSTEM FOR CONFIGURING AN ULTRA-HIGH DENSITY HETEROGENEOUS NETWORK**

VERFAHREN UND SYSTEM ZUR KONFIGURIERUNG EINES ULTRAHOCHDICHTEN HETEROGENEN NETZWERKS

PROCÉDÉ ET SYSTÈME POUR CONFIGURER UN RÉSEAU HÉTÉROGÈNE À ULTRA-HAUTE DENSITÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**03.10.2018 Bulletin 2018/40**

(73) Proprietors:
• **Mitsubishi Electric R & D Centre Europe B.V.**
**1119 NS Schiphol Rijk (NL)**
Designated Contracting States:
**FR**
• **Mitsubishi Electric Corporation**
**Tokyo 100-8310 (JP)**
Designated Contracting States:
**AL AT BE BG CH CY CZ DE DK EE ES FI GB GR HR HU IE IS IT LI LT LU LV MC MK MT NL NO PL PT RO RS SE SI SK SM TR**

(72) Inventors:
• **BRUNEL, Loïc**
**35708 Rennes Cedex 7 (FR)**
• **KHANFOUCI, Mourad**
**35708 Rennes Cedex 7 (FR)**

(74) Representative: **Cabinet Le Guen Maillet**
**3, impasse de la Vigie**
**CS 71840**
**35418 Saint-Malo Cedex (FR)**

(56) References cited:
• **HUAWEI ET AL: "Views on LTE Rel-14", 3GPP DRAFT; RP-151356 HUAWEI VIEWS ON LTE REL-14, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. TSG RAN, no. Phoenix, USA; 20150914 - 20150916 8 September 2015 (2015-09-08), XP051043490, Retrieved from the Internet: URL:http://www.3gpp.org/ftp/Meetings_3GPP_ SYNC/RAN/Docs/ [retrieved on 2015-09-08]**

## Description

The present invention relates generally to a method and a system for configuring an ultra-high density heterogeneous network comprising roadside unit type base stations, regular base stations and user terminals.

Fifth generation mobile networks or 5th generation wireless systems (5G) denotes the proposed next major phase of mobile telecommunications standards beyond the current 4G/IMT-Advanced standards. 5G planning includes Internet connection speeds faster than current 4G, and other improvements like for example coverage improvement.

5G will have a component based on ultra-high density heterogeneous networks. These ultra-high density heterogeneous networks (UHDN) consist of dense clusters of nodes, like for example base stations, relays, pico base stations, randomly deployed in the coverage area where the cluster nodes are having different transmission capabilities, i.e. transmission powers, antenna gains, backhaul quality and nature.

When UHDN deployment is considered within vehicular communications scenario, the network can be considered as a co-deployment of roadside unit (RSU) type base stations and regular base station.

For example, road side units type base stations have faster vehicle to vehicle or to network infrastructure application (V2X) than regular base stations may provide. Road side units type base stations are directly connected to a V2X application instead of being connected to the application layer through the core network as regular base stations.

The objective of road side units type base stations is to transport and timely disseminate safety related messages to a fleet of vehicles that are crossing the coverage area. These safety related messages may contain indications and warnings regarding traffic and/or metrological situation in the coverage area of the UHDN in case of vehicle to infrastructure communications. For vehicle to vehicle communications, the safety related messages may contain speed and position indication of at least one vehicle in the coverage area. These messages are transmitted to other base stations in the coverage area.

Vehicles are seen as user terminals (UE) of the network and the dissemination should be performed with low latency in order to improve the safety of the vehicular system.

The V2X application transport latency to a vehicle is related to the number of hops from the closest regular base station the vehicle is served by to the closest RSU type base station. The safety related message is transmitted from the RSU type base station and then relayed to the vehicle by the regular base station through the meshed vehicular network. For the minimisation of the latency of the dissemination of the safety oriented messages in the network, it is important to optimize the centrality of RSU type base stations in the two tired UHDN deployments envisioned for the vehicular communication scenario in 5G networks.

The document entitled "Views on LTE Rel-14" 3GPP draft; RP-151356 discloses ultra-high density heterogeneous network comprising roadside unit type base stations, regular base stations and user terminal.

To that end, the present invention concerns a method for configuring an ultra-high density heterogeneous network comprising roadside unit type base stations, regular base stations and user terminals, the road side units type base stations having faster user terminal to user terminal or to network infrastructure application than regular base stations, characterized in that the method comprises the steps of:

- obtaining radio measurements reports from user terminals through regular base stations,
- identifying, using the measurement reports, regular base stations and road side units type base stations,
- building a graph of the ultra-high density heterogeneous network from the identified regular base stations and road side units type base station, a node of the graph corresponding to an identified regular base station or a road side unit type base station,
- checking if a network topology reconfiguration has to be performed,
- performing a network topology reconfiguration by deleting connections between road side unit type base stations and regular base station and by adding connections between road side unit type base stations if the network topology reconfiguration has to be performed.

The present invention also concerns a system for configuring an ultra-high density heterogeneous network comprising roadside unit type base stations, regular base stations and user terminals, the road side units type base stations having faster user terminal to user terminal or to network infrastructure application than regular base stations, characterized in that the system comprises:

- means for obtaining radio measurements reports from user terminals through regular base stations,
- means for identifying, using the measurement reports, regular base stations and road side units type base stations,
- means for building a graph of the ultra-high density heterogeneous network from the identified regular base stations and road side units type base station, a node of the graph corresponding to an identified regular base station or a road side unit type base station,
- means for checking if a network topology reconfiguration has to be performed,
- means for performing a network topology reconfiguration by deleting connections between road side unit type base stations and regular base station and by adding connections between road side unit type base stations if the network topology reconfiguration has to be performed.

Thus, the centrality of the road side unit type base stations is increased in the network and the latency of information dissemination is reduced.

According to a particular feature, the method is executed by a controller of the ultra-high density heterogeneous network.

Thus, the overall latency of information dissemination in the network is reduced and the reconfiguration latency is reduced, increasing the reactivity of the scheme.

According to a particular feature, the method comprises further step of determining a centrality value for each node of the graph, the centrality value for a node being the inverse of the sum of the distance between the node and all the other nodes in the graph and the network topology reconfiguration has to be performed according to the determined centrality values.

Thus, the base stations that are closer to the other base stations in the network are determined and the optimization of the latency of the dissemination of the information in the network is simplified.

According to a particular feature, the method comprises further step of determining a global network centrality value and the network topology reconfiguration has to be performed according to the determined global centrality value.

Thus, the reconfiguration can be triggered and stopped based on the average dissemination latency in the network that is related to the global centrality value.

According to a particular feature, the global network centrality value $F$ is determined according to the following formula:

$$F = \frac{\sum_{i=1}^{N}\left[\max_{V}\left(C_{D}(i)\right) - C_{D}(i)\right]}{(N-1)(N-2)}$$

where $V$ is the set of the road side unit type base stations, $C_D(i)$ is the number of nodes which are connected to the node $i$ by one link only and $N$ is the number of nodes in the graph.

Thus, the increase of the global network centrality value increases the number of neighbours of the road side unit base stations and reduces the average dissemination latency in the network .

According to a particular feature, the method is executed by a controller of the ultra-high density heterogeneous network and by the road side unit type base stations and the method comprises further steps of:

- determining, by the controller, a centrality value for each road side unit type base station, the centrality value for a node being the inverse of the sum of the distance between the node and all the other nodes in the graph,
- transferring, by the controller, to each road side unit type base station, the centrality value of the road side unit type base station of the graph together with information identifying the road side unit type base station having the highest centrality metric,

and the network topology reconfiguration is performed by the road side unit type base station according to the received centrality value of the road side unit type base station.

Thus, the latency of the network topology reconfiguration is reduced, the reactivity of the scheme is increased as well as the ability to handle high speed user terminal measurements.

According to a particular feature, the method is executed by a controller of the ultra-high density heterogeneous network and by the regular base stations and the road side unit type base stations, the steps of obtaining, identifying and graph building are performed by the controller, the steps of checking and performing the network topology reconfiguration are performed by the regular base stations and the road side unit type base stations and the method comprises further steps of:

- determining, by the controller, routing tables,
- transferring, by the controller, the routing tables to the regular base stations and the road side unit type base stations,
- determining, by each regular base station and the road side unit type base station, a centrality value $C_D(v)$ where $C_D(v)$ is the number of nodes which are connected to the regular base station or the road side unit type base station $v$ by one link only,
- determining, by the regular base stations and the road side unit type base stations a global network centrality value and the network topology reconfiguration has to be performed according to the determined global centrality value.

Thus, the reactivity of the system is further increased because the centrality scores can be calculated locally. The system handles more efficiently high speed user terminal measurements and topology changes in the network.

According to a particular feature, the global network centrality value $F$ is determined according to the following formula:

$$F = \frac{\max_{v \in V}\left(C_D(v)\right)}{N} - \frac{m}{N^2} \text{ where } m = \sum_{v=1}^{N} C_D(v)$$

$\max_{v \in V}(C_D(v))$ is the maximum of the degree centrality values as and N is the number of nodes of the graph.

Thus, the centrality value $F$ may be calculated cooperatively by the means of consensus averaging techniques that are simplifying the calculations for the distributed case.

The characteristics of the invention will emerge more clearly from a reading of the following description of an example embodiment, the said description being produced with reference to the accompanying drawings, among which:

Fig. 1 represents a wireless cellular telecommunication network in which the present invention is implemented;

Fig. 2 is a diagram representing the architecture of a regular base station in which the present invention is implemented ;

Fig. 3 is a diagram representing the architecture of a RSU type base station in which the present invention is implemented;

Fig. 4 is a diagram representing the architecture of a controller in which the present invention is implemented;

Fig. 5 discloses an example of an algorithm executed by a controller according to a first mode of realization of the present invention;

Fig. 6a discloses an example of an algorithm executed by a controller according to a second mode of realization of the present invention;

Fig. 6b discloses an example of an algorithm executed by the RSU type base stations according to the second mode of realization of the present invention;

Fig. 7a discloses an example of an algorithm executed by a controller according to a third mode of realization of the present invention;

Fig. 7b discloses an example of an algorithm executed by the regular and RSU type base stations according to the third mode of realization of the present invention.

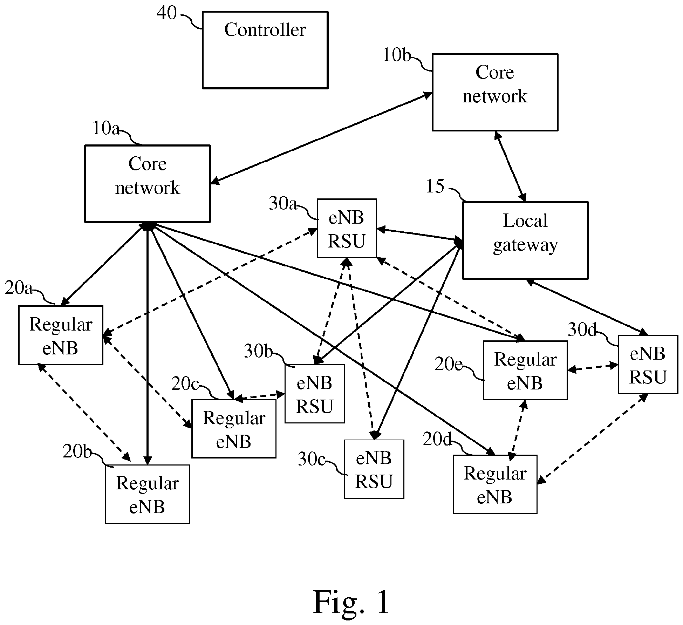

**Fig. 1** represents a wireless cellular telecommunication network in which the present invention is implemented.

The wireless cellular telecommunication network comprises a controller 40, plural RSU type base stations noted 30a to 30d, core network devices noted 10a and 10b, a local gateway noted 15, and comprises plural regular base stations noted 20a to 20e.

The controller 40, the core network devices 10, the regular base stations 20, the local gateway 15, the RSU type base stations 30 are linked together through a telecommunication network.

The full lines arrows represent the connections between the core network devices 10, the regular base stations 20, the local gateway 15, the RSU type base stations 30 within the telecommunication network.

For the sake of clarity, the connections between the controller 40 and the regular and RSU type base stations are not shown in Fig. 1.

The doted lines arrows represent the connections between the regular and RSU type base stations named hereinafter X2 interfaces.

RSU type base stations 30 are directly connected to the local gateway 15 for VX2 applications.

Regular base stations are connected to core network devices 10 for VX2 applications.

The controlled 40 may be a Software Defined Network (SDN) controller.

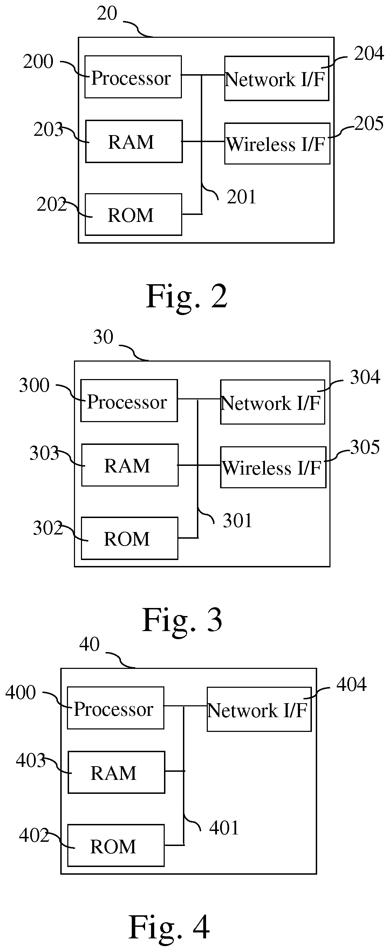

**Fig. 2** is a diagram representing the architecture of a regular base station in which the present invention is implemented.

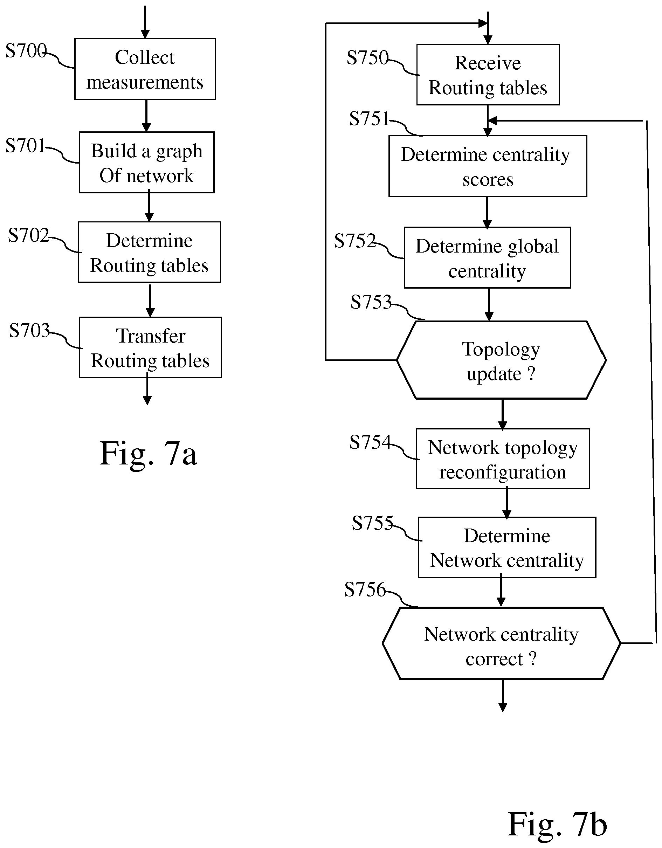

The regular base station 20 has, for example, an architecture based on components connected together by a bus 201 and a processor 200 controlled by the programs as disclosed in Fig. 7b.

It has to be noted here that the regular base station 20 may have an architecture based on dedicated integrated circuits.

The bus 201 links the processor 200 to a read only memory ROM 202, a random access memory RAM 203, a network interface 204 and a wireless interface 205.

The memory 203 contains registers intended to receive variables and the instructions of the program related to the algorithm as disclosed in Fig. 7b.

The processor 200 controls the operation of the wireless interface 205 and the network interface 204.

The read only memory 202 contains instructions of the program related to the algorithm as disclosed in Fig. 7b, which are transferred, when the regular base station 20 is powered on, to the random access memory 203.

Any and all steps of the algorithm described hereafter with regard to Fig. 7b may be implemented in software by execution of a set of instructions or program by a programmable computing machine, such as a PC (*Personal Computer*), a DSP (*Digital Signal Processor*) or a microcontroller; or else implemented in hardware by a machine or a dedicated component, such as an FPGA (*Field-Programmable Gate Array*) or an ASIC (*Application-Specific Integrated Circuit*).

In other words, the regular base station 20 includes circuitry, or a device including circuitry, causing the regular base station 20 to perform the steps of the algorithms described hereafter with regard to Fig. 7b.

Such a device including circuitry causing the regular base station 20 to perform the steps of the algorithm described hereafter with regard to Fig. 7b may be an external device connectable to the regular base station 20.

**Fig. 3** is a diagram representing the architecture of a RSU type base station in which the present invention is implemented.

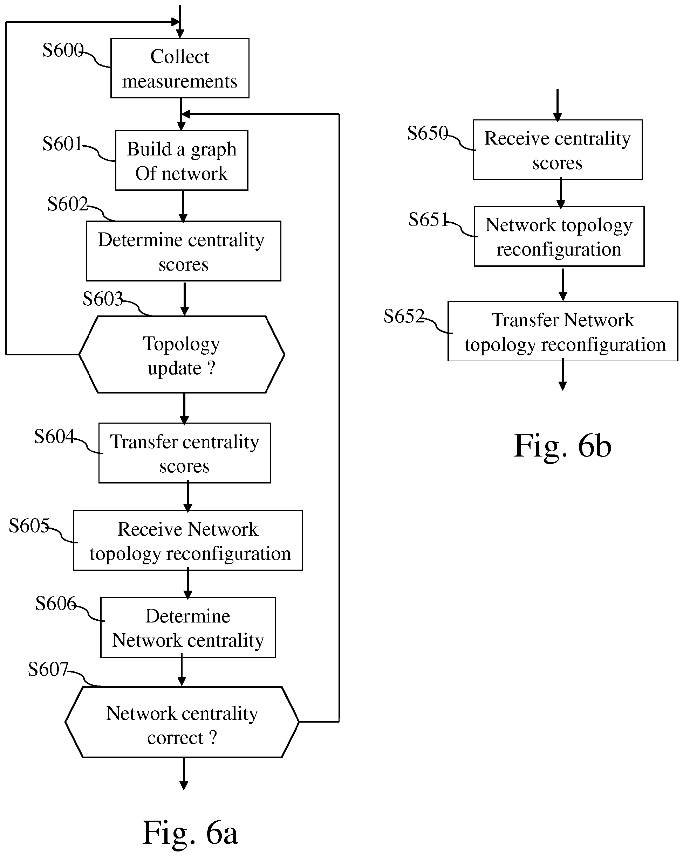

The RSU type base station 30 has, for example, an architecture based on components connected together by a bus 301 and a processor 300 controlled by the programs as disclosed in Fig. 6b or 7b.

It has to be noted here that the RSU type base station 30 may have an architecture based on dedicated integrated circuits.

The bus 301 links the processor 300 to a read only memory ROM 302, a random access memory RAM 303, a network interface 304 and a wireless interface 305.

The memory 303 contains registers intended to receive variables and the instructions of the program related to the algorithm as disclosed in Fig. 6b or 7b.

The processor 300 controls the operation of the wireless interface 305 and the network interface 304. The X2 links are established or deleted through the network interface 304.

The read only memory 302 contains instructions of the program related to the algorithm as disclosed in Fig. 6b or 7b, which are transferred, when the RSU type base station 30 is powered on, to the random access memory 303.

Any and all steps of the algorithm described hereafter with regard to Fig. 6b or 7b may be implemented in software by execution of a set of instructions or program by a programmable computing machine, such as a PC (*Personal Computer*), a DSP (*Digital Signal Processor*) or a microcontroller; or else implemented in hardware by a machine or a dedicated component, such as an FPGA (*Field-Programmable Gate Array*) or an ASIC (*Application-Specific Integrated Circuit*).

In other words, the RSU type base station 30 includes circuitry, or a device including circuitry, causing the RSU type base station 30 to perform the steps of the algorithm described hereafter with regard to Fig. 6b or 7b.

Such a device including circuitry causing the RSU type base station 30 to perform the steps of the algorithm described hereafter with regard to Fig. 6b or 7b may be an external device connectable to the base station BS.

**Fig. 4** is a diagram representing the architecture of a controller in which the present invention is implemented.

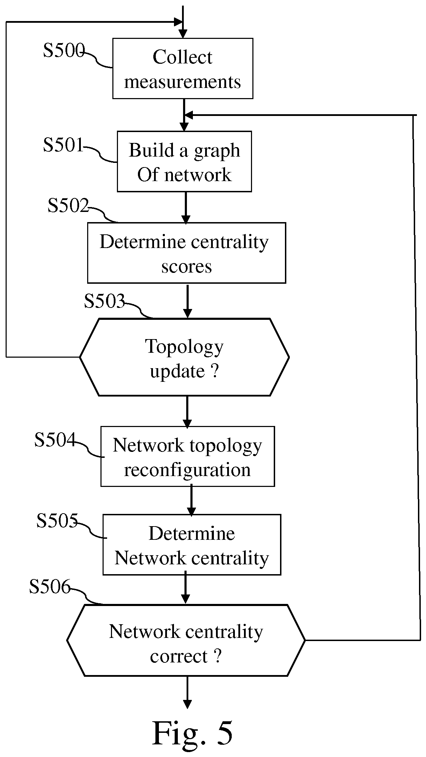

The controller 40 has, for example, an architecture based on components connected together by a bus 401 and a processor 400 controlled by the programs as disclosed in Fig. 5 or 6a or 7a.

It has to be noted here that the controller 40 may have an architecture based on dedicated integrated circuits.

The bus 401 links the processor 400 to a read only memory ROM 402, a random access memory RAM 403 and a network interface 404.

The memory 403 contains registers intended to receive variables and the instructions of the program related to the algorithm as disclosed in Fig. 5 or 6a or 7a.

The read only memory 402 contains instructions of the program related to the algorithm as disclosed in Fig. 5 or 6a or 7a, which are transferred, when the controller 40 is powered on, to the random access memory 403.

Any and all steps of the algorithm described hereafter with regard to Fig. 5 or 6a or 7a may be implemented in software by execution of a set of instructions or program by a programmable computing machine, such as a PC (*Personal Computer*), a DSP (*Digital Signal Processor*) or a microcontroller; or else implemented in hardware by a machine or a dedicated component, such as an FPGA (*Field-Programmable Gate Array*) or an ASIC (*Application-Specific Integrated Circuit*).

In other words, the controller 40 includes circuitry, or a device including circuitry, causing the controller 40 to perform the steps of the algorithm described hereafter with regard to Fig. 5 or 6a or 7a.

Such a device including circuitry causing the controller 40 to perform the steps of the algorithms described hereafter with regard to Fig. 5 or 6a or 7a may be an external device connectable to the controller 40.

**Fig. 5** discloses an example of an algorithm executed by a controller according to a first mode of realization of the present invention.

The present algorithm will be disclosed in an example wherein it is executed by the processor 400 of the controller 40.

At step S500, the processor 400 obtains radio measurements reports from user terminals, for example vehicles, through regular base stations 20.

Each of the radio measurement report comprises information identifying the current attachment regular base station of the user terminal, i.e. the regular base station which is communicating with the vehicle, and the set of the neighbouring regular and RSU type base stations from which the user terminal receives signal with a signal to interference and noise ratio (SINR) above a predetermined level, for example equal to -10dB or with a signal strength (RSRP) above a predetermined level, for example equal to -80dBm.

Each of the measurement report comprises the interference levels of the neighbouring regular and RSU base stations that are received by the user terminal. The interference levels may be obtained from the reference signal received power (RSRP) and signal to interference and noise (SINR) measurements. For example, the measurement reports may include the regular or RSU type base station that is interfering the most over the user terminal, i.e. having an interference level above 0dB.

The measurement report may include additional information about the regular base station 20 load and/or the current resource allocation in the regular base station.

A next step S501, the processor 400 builds a representation of the network.

The processor 400 using the received measurement reports identifies the regular base stations 20 and the RSU type base stations 30 of the wireless cellular telecommunication network that are identified the most in the measurement reports or that are identified a number of times that is upper than the average of identifications of regular base stations 20 and the RSU type base stations 30 in the measurement reports.

Using only the identified regular base stations 20 and the RSU type base stations 30, the processor 400 builds a representation of the network.

The representation may be for example a graph that links the identified regular base stations 20 and the RSU type base stations 30.

A graph is a representation of a set of objects and relations between the objects, here regular and RSU type base stations, where some pairs of objects are connected by links, i.e. related. The interconnected objects are represented by mathematical abstractions called nodes and the links that connect some pairs of nodes are called edges.

The "edges" connecting the nodes of the graph are representing the actual X2 interfaces linking the regular and RSU type base stations.

A second graph may be built using the received radio measurements. In the second graph, the nodes are linked by edges if they are reported by a measurement report.

The processor 400 moves then to step S503 or according to a variant of realization, to step S502.

At next step S502, the processor 400 determines centrality values for each regular or RSU type base stations of the graph.

The centrality value for a node $i$ is the inverse of the sum of the distance between the node $i$ and all the other nodes in the graph. The centrality value is defined as:

$$C_c(i) = \frac{1}{\sum_{j=1; j \neq i}^{N} d(i, j)}$$

Where $N$ is the number of nodes in the graph and $d(i,j)$ is a distance metric that may be defined as the number of hops or links between the node $i$ and the node $j$ or as the communication latency between the nodes $i$ and $j$ if there is an edge between the nodes or the minimum multi hop communication latency between the node $i$ and $j$.

The processor 400 moves then to step S503.

At next step S503, the processor 400 checks if a network topology update needs to be performed.

For that, the processor 400 determines a global network centrality $F$ the value of which is equal to one if the graph has a star topology. The global network centrality value is minimized if there is a low variability in degree centrality of the nodes in the network.

$$F = \frac{\sum_{i=1}^{N} [\max_V (C_D(i)) - C_D(i)]}{(N-1)(N-2)}$$

The set $V$ is the set of the RSU type base stations of the graph and does not include the regular base stations and $C_D(i)$ is the number of nodes which are connected to the node i by one link only.

If the global network centrality $F$ value is lower than a first predetermined value which is, for example equal to 0.5, a network topology update needs to be performed and the processor 400 moves to step S504. Otherwise, the processor 400 returns to step S500.

According to the variant, the processor 400 checks if a network topology update needs to be performed using the centrality values determined at step S502.

The topology update is needed to be performed if the maximum of the centralities $C_c(i)$ for RSU type base stations is lower than the maximum of the centralities of the regular base stations.

The topology update is needed to be performed if the maximum of the centralities $C_c(i)$ for RSU type base stations is lower than the average of the centralities values of the regular base stations.

If the maximum of the centralities $C_c(i)$ for RSU type base stations is lower than the maximum of the centralities of the regular base stations or if the maximum of the centralities $C_c(i)$ for RSU type base stations is lower than the average of the centralities values of the regular base stations, the processor 400 moves to step S504. Otherwise, the processor 400 returns to step S500.

At step S504, the processor 400 reconfigures the network topology.

The processor 400 commands the RSU type base stations in order to establish or delete X2 connections.

The processor 400 commands the RSU type base stations with low centrality value to delete X2 interfaces with regular base stations. For example, a low centrality value is a value lower than a value of 0.5.

The processor 400 commands the RSU type base stations with low centrality value to add X2 interface with the RSU type base station having the highest centrality value.

At next step S505, the processor 400 determines a new global network centrality $F$ as disclosed at step S503.

At next step S506, the processor 400 checks if the new global network centrality $F$ value is lower than the predetermined value.

If the new global network centrality $F$ value is lower than a second predetermined value, for example equal to 0.8, the processor 400 returns to step S501. Otherwise, the processor 400 interrupts the present algorithm.

**Fig. 6a** discloses an example of an algorithm executed by a controller according to a second mode of realization of the present invention.

The present algorithm will be disclosed in an example wherein it is executed by the processor 400 of the controller 40.

At step S600, the processor 400 obtains radio measurements reports from user terminals, for example vehicles, through regular base stations 20.

Each of the radio measurement report comprises information identifying the current attachment regular base station of the user terminal, i.e. the regular base station which is communicating with the vehicle, and the set of the neighbouring regular and RSU type base stations from which the user terminal receives signal with a signal to interference and noise ratio (SINR) above a predetermined level, for example equal to -10dB or with a signal strength (RSRP) above a predetermined level, for example equal to -80dBm.

Each of the measurement report comprises the interference levels of the neighbouring regular and RSU base stations that are received by the user terminal. The interference levels may be obtained from the reference signal received power (RSRP) and signal to interference and noise (SINR) measurements. For example, the measurement reports may include the regular or RSU type base station that is interfering the most over the user terminal, i.e. having an interference level above 0dB.

The measurement report may include additional information about the regular base station 20 load and/or the current resource allocation in the regular base station.

A next step S601, the processor 400 builds a representation of the network.

The processor 400 using the received measurement reports identifies the regular base stations 20 and the RSU type base stations 30 of the wireless cellular telecommunication network that are identified the most in the measurement reports or that are identified a number of times that is upper than the average of identifications of regular base stations 20 and the RSU type base stations 30 in the measurement reports.

Using only the identified regular base stations 20 and the RSU type base stations 30, the processor 400 builds a representation of the network.

The representation may be for example a graph that links the identified regular base stations 20 and the RSU type base stations 30.

The "edges" connecting the nodes of the graph are representing the actual X2 interfaces linking the regular and RSU type base stations.

A second graph may be built using the received radio measurements. In the second graph, the nodes are linked by edges if they are reported by a measurement report.

At next step S602, the processor 400 determines centrality values for each regular or RSU type base stations of the graph.

The centrality value for a node $i$ is the inverse of the sum of the distance between the node $i$ and all the other nodes in the graph. The centrality value is defined as:

$$C_c(i) = \frac{1}{\sum_{j=1; j\neq i}^{N} d(i,j)}$$

At next step S603, the processor 400 checks if a network topology update needs to be performed.

For example, the processor 400 determines a global network centrality $F$ the value of which is equal to one if the graph has a star topology. The global network centrality value is minimized if there is a low variability in degree centrality of the nodes in the network.

$$F = \frac{\sum_{i=1}^{N}[\max_V(C_D(i)) - C_D(i)]}{(N-1)(N-2)}$$

The set $V$ is the set of the RSU type base stations of the graph and does not include the regular base stations and $C_D(i)$ is the number of nodes which are connected to the node $i$ by one link only.

If the global network centrality $F$ value is lower than a first predetermined value which is, for example equal to 0.5, a network topology update needs to be performed and the processor 400 moves to step S604. Otherwise, the processor 400 returns to step S600.

For example, the processor 400 checks if a network topology update needs to be performed using the centrality values determined at step S602.

The topology update is needed to be performed if the maximum of the centralities $C_c(i)$ for RSU type base stations is lower than the maximum of the centralities of the regular base stations.

The topology update is needed to be performed if the maximum of the centralities $C_c(i)$ for RSU type base stations is lower than the average of the centralities values of the regular base stations.

If the maximum of the centralities $C_c(i)$ for RSU type base stations is lower than the maximum of the centralities of the regular base stations or if the maximum of the centralities $C_c(i)$ for RSU type base stations is lower than the average of the centralities values of the regular base stations, the processor 400 moves to step S604. Otherwise, the processor 400 returns to step S600.

At step S604, the processor 400 commands the transfer to the RSU type base station identified in the graph of the centrality metric of the RSU type base station determined at step S602 together with information identifying the RSU type base station having the highest centrality metric.

At next step S605, the processor 400 receives, from each RSU type base station identified in the graph, information identifying each X2 connection that is deleted or added by the RSU type base station.

At next step S606, the processor 400 determines a new global network centrality *F* as disclosed at step S603.

At next step S607, the processor 400 checks if the new global network centrality *F* value is lower than a second predetermined value, for example equal to 0.8.

If the new global network centrality *F* value is lower than the second predetermined value, the processor 400 returns to step S601. Otherwise, the processor 400 interrupts the present algorithm.

**Fig. 6b** discloses an example of an algorithm executed by the RSU type base stations according to the second mode of realization of the present invention.

The present algorithm will be disclosed in an example wherein it is executed by the processor 300 of each RSU type base station.

At step S650, the centrality metric of the RSU type base station is received from each RSU type base station.

At next step S651, the processor 300 reconfigures the network topology.

The processor 300 deletes X2 interfaces with regular base stations, adds X2 interfaces with the RSU type base station having the highest centrality value if the received centrality value is low, for example lower than 0.3.

At step S652, the processor 300 commands the transfer to the controller 40 of information identifying each X2 connection that is deleted or added by the RSU type base station.

**Fig. 7** discloses an example of an algorithm executed by a controller according to a third mode of realization of the present invention.

The present algorithm will be disclosed in an example wherein it is executed by the processor 400 of the controller 40.

At step S700, the processor 400 obtains radio measurements reports from user terminals, for example vehicles, through regular base stations 20.

Each of the radio measurement report comprises information identifying the current attachment regular base station of the user terminal, i.e. the regular base station which is communicating with the vehicle, and the set of the neighbouring regular and RSU type base stations from which the user terminal receives signal with a signal to interference and noise ratio (SINR) above a predetermined level, for example equal to -10dB or with a signal strength (RSRP) above a predetermined level, for example equal to -80dBm.

Each of the measurement report comprises the interference levels of the neighbouring regular and RSU base stations that are received by the user terminal. The interference levels may be obtained from the reference signal received power (RSRP) and signal to interference and noise (SINR) measurements. For example, the measurement reports may include the regular or RSU type base station that is the most interfering over the user terminal, i.e. having interference level above 0dB.

The measurement report may include additional information about the regular base station 20 load and/or the current resource allocation in the regular base station.

A next step S701, the processor 400 builds a representation of the network.

The processor 400, using the received measurement reports, identifies the regular base stations 20 and the RSU type base stations 30 of the wireless cellular telecommunication network that are identified the most in the measurement reports or that are identified a number of times that is upper than the average of identifications of regular base stations 20 and the RSU type base stations 30 in the measurement reports.

Using only the identified regular base stations 20 and the RSU type base stations 30, the processor 400 builds a representation of the network.

The representation may be for example a graph that links the identified regular base stations 20 and the RSU type base stations 30.

The "edges" connecting the nodes of the graph are representing the actual X2 interfaces linking the regular and RSU type base stations.

A second graph may be build using the received radio measurements. In the second graph, the nodes are linked by edges if they are reported by a measurement report.

At next step S702, the processor 400 determines routing tables for all the nodes of the network, based on the representation of the network. These routing tables are for example based on the calculation of shortest paths in the graph representation. The routing tables may include the number of hops in the shortest paths between any node of the network.

For example, the processor 400 calculates routing tables by applying in the graph of the network a breadth first search (BFS) as disclosed in the paper entitled "Faster Betweenness Centrality Based on Data Structure Experimentation" and available at :http://www.sciencedirect.com/science/article/pii/S18 77050913003463. The breadth search technique finds for each node *v* the minimum distances from the node *v* to each node *j* of the graph, these distances being defined as $d(v, j)$. The graph representation is unweighted in this option, i.e. the edges between the nodes *v* and *j* are not favored and the transmission to all the neighbor nodes is considered equally. The routing table for the node *v* consists of the minimum distances $d(v,j)$ and the shortest path to reach the nodes *j* from the node *v*.

For example, the processor 400 calculates routing tables by applying in the graph of the network a Dijkstra search as disclosed in the paper of Ulrich Brandes entitled "A Faster Algorithm for Betweenness Centrality ». The Dijkstra search technique finds for each node *v* the minimum distances from *v* to each node j of the network, these distances being defined as $d(v,j)$. The graph representation is, according to that example, weighted, i.e. the edges of the nodes of the graph are weighted by the transmission latencies between the nodes of the edge. The routing table for the node *v* consists of the minimum distances $d(v, j)$ and the shortest path to reach the nodes *j* from the node *v*.

At next step S703, the processor 400 transfers to each node the routing table of the node.

The routing table transmitted to the node *v* consist of the nodes that are the closest nodes to the node *v*, this closeness being considered in the sense of the minimization of the transmission latency.

**Fig. 7b** discloses an example of an algorithm executed by the regular and RSU type base stations according to the third mode of realization of the present invention.

The present algorithm will be disclosed in an example wherein it is executed by the processor 200 of the regular base stations 20 or by the processor 300 of the RSU type base stations.

At step S750, the processor 200 or 300 detects the reception of a routing table.

At step S751, the processor 200 determines a centrality value of the regular base station 20 or the processor 300 determines a centrality value of the RSU type base station 20.

The regular base stations 20 and the RSU type base stations cooperatively calculate their closeness centrality metrics as the following:

Each regular base station 20 and RSU type base station *v* transmits to the other regular base stations 20 and RSU type base stations identified in the received routing table, the minimum distance from the regular base station or RSU type base station *v* to the node *j* i.e. $d(j,v)$. The node *v* receives the minimum distances from the other nodes of the network $d(v,j)$ identified in the routing table. Each regular base station 20 and RSU type base station sums the received minimum distances in order to obtain the centrality value as $C_c(v) = \dfrac{1}{\sum_j d(v, j)}$ .

Each regular base station 20 and RSU type base station *v* obtains its degree centrality $C_D(v)$ and transfers it to regular base station 20 and RSU type base station *v*. $C_D(v)$ is the number of nodes which are connected to the node *v* by one link only.

At next step S752, each regular base station 20 and RSU type base station *v* determines a global network centrality *F* the value of which is equal to one if the graph has a star topology.

The global network centrality value is minimized if there is a low variability in centralities values of the regular base stations 20 and RSU type base stations.

The calculation of the global network centrality value *F* is obtained in two phases.

In a first phase, each RSU type base station determines the maximum of the degree centrality values as $\max_{v \in V}(C_D(v))$. In a second phase, each RSU type base station determines the global network centrality *F* as :

$$F = \frac{\max_{v \in V}\big(C_D(v)\big)}{N} - \frac{m}{N^2} \ \text{ where } \ m = \sum_{v=1}^{N} C_D(v)$$

At next step S753, each RSU type base station checks if a network topology update needs to be performed.

If the global network centrality *F* value is lower than a first predetermined value which is, for example equal to 0.5, a network topology update needs to be performed and the processor 300 moves to step S754. Otherwise, the processor 300 returns to step S750.

At step S754, the processor 300 reconfigures the network topology.

The processor 300 commands the RSU type base station in order to establish or delete X2 connections.

The processor 300 commands the deletion of at least one X2 interface with a regular base station if the RSU type base station has a low centrality value, for example lower than 0.5

The processor 300 commands the adding of an X2 interface with the RSU type base station having the highest centrality value.

At next step S755, the processor 300 determines a new global network centrality *F* as disclosed at step S752.

At next step S756, the processor 300 checks if the new global network centrality *F* value is lower than a second predetermined value.

If the new global network centrality *F* value is lower than the second predetermined value, for example equal to 0.8, the processor 300 returns to step S751. Otherwise, the processor 300 interrupts the present algorithm.

Many modifications can be made to the embodiments of the invention described above without departing from the scope of the present invention.

**Claims**

1. A computer-implemented method for configuring an ultra-high density heterogeneous network comprising roadside unit type base stations, regular base stations and user terminals, the road side units type base stations having faster user terminal to user terminal or to network infrastructure application than regular base stations, **characterized in that** the method comprises the steps of:

- obtaining (S500) radio measurements reports from user terminals through regular base stations,
- identifying, using the measurement reports, regular base stations and road side units type base stations,
- building (S501) a graph of the ultra-high density heterogeneous network from the identified regular base stations and road side units type base station, a node of the graph corresponding to an identified regular base station or a road side unit type base station, links of the graph linking the regular base stations and road side units type base station,

- determining (S502) a centrality value for each node of the graph, the centrality value for a node being the inverse of the sum of the distance between the node and all the other nodes in the graph,

- determining a global network centrality value,

- checking (S503) if a network topology reconfiguration has to be performed, wherein the network topology reconfiguration has to be performed according to the determined centrality values for each node of the graph and the determined global centrality value,

- performing (S504) the network topology reconfiguration by deleting connections between road side unit type base stations and regular base station and by adding connections between road side unit type base stations if the network topology reconfiguration has to be performed.

2. Method according to claim 1, wherein the method is executed by a controller of the ultra-high density heterogeneous network.

3. Method according to claim 1, wherein the global network centrality value $F$ is determined according to the following formula:

$$F = \frac{\sum_{i=1}^{N}\left[\max_{V}\left(C_{D}\left(i\right)\right)-C_{D}\left(i\right)\right]}{\left(N-1\right)\left(N-2\right)}$$

where $V$ is the set of the road side unit type base stations, $C_D(i)$ is the number of nodes which are connected to the node $i$ by one link only and $N$ is the number of nodes in the graph.

4. Method according to claim 1, wherein the method is executed by a controller of the ultra-high density heterogeneous network and by the road side unit type base stations, the centrality value is determined by the controller, and transferred by the controller, to each road side unit type base station, together with information identifying the road side unit type base station having the highest centrality metric, and the network topology reconfiguration is performed by the road side unit type base station according to the received centrality value of the road side unit type base station.

5. Method according to claim 1, wherein the method is executed by a controller of the ultra-high density heterogeneous network and by the regular base stations and the road side unit type base stations, the steps of obtaining, identifying and graph building are performed by the controller, the steps of checking and performing the network topology reconfiguration are performed by the regular base stations and the road side unit type base stations and in that the method comprises further steps of:

- determining, by the controller, routing tables,
- transferring, by the controller, the routing tables to the regular base stations and the road side unit type base stations,
- determining, by each regular base station and the road side unit type base station, the centrality value based on $C_D(v)$ where $C_D(v)$ is the number of nodes which are connected to the regular base station or the road side unit type base station v by one link only,
- determining, by the regular base stations and the road side unit type base stations the global network centrality value.

6. Method according to claim 1, wherein the global network centrality value $F$ is determined according to the following formula:

$$F = \frac{\max_{v \in V}\left(C_{D}\left(v\right)\right)}{N} - \frac{m}{N^{2}} \quad \text{where} \quad m = \sum_{v=1}^{N}C_{D}\left(v\right)$$

$\max_{v \in V}(C_D(v))$ is the maximum of the degree centrality values as and N is the number of nodes of the graph.

7. A system for configuring a ultra-high density heterogeneous network comprising roadside unit type base stations, regular base stations and user terminals, the road side units type base stations having faster user terminal to user terminal or to network infrastructure application than regular base stations, **characterized in that** the system comprises:

- means for obtaining radio measurements reports from user terminals through regular base stations,
- means for identifying, using the measurement reports, regular base stations and road side units type base stations,
- means for building a graph of the ultra-high density heterogeneous network from the identified regular base stations and road side units type base station, a node of the graph corresponding to an identified regular base station or a road side unit type base station, links of the graph linking the regular base stations and road side units type base station,
- means for determining a centrality value for each node of the graph, the centrality value for a node being the inverse of the sum of the distance between the node and all the other nodes in the graph,
- means for determining a global network centrality value,
- means for checking if a network topology reconfiguration has to be performed, wherein the network topology reconfiguration has to be performed according to the determined centrality values for each node of the graph and the determined global centrality value
- means for performing a network topology reconfiguration by deleting connections between road side unit type base stations and regular base station and by adding connections between road side unit type base stations if the network topology reconfiguration has to be performed.

**8.** Computer program product which can be directly loadable into a programmable device, comprising instructions or portions of code for implementing the steps of the method according to claims 1 to 6, when said computer program is executed on a programmable device.

**Patentansprüche**

**1.** Computerimplementiertes Verfahren zum Konfigurieren eines heterogenen Netzwerks ultrahoher Dichte, das Basisstationen vom Straßenseiten-Einheitentyp, reguläre Basisstationen und Anwenderendgeräte umfasst, wobei die Basisstationen vom Straßenseiten-Einheitentyp eine schnellere Infrastrukturanwendung von Anwenderendgerät zu Anwenderendgerät oder zu Netzwerk als reguläre Basisstationen haben, **dadurch gekennzeichnet, dass** das Verfahren die folgenden Schritte umfasst:

- Erhalten (S500) von Berichten über Funkmessungen von Anwenderendgeräten durch reguläre Basisstationen,
- Identifizieren, unter Verwendung der Berichte über Messungen, von regulären Basisstationen und Basisstationen vom Straßenseiten-Einheitentyp,
- Erstellen (S501) eines Graphen des heterogenen Netzwerks ultrahoher Dichte aus den identifizierten regulären Basisstationen und einer Basisstation vom Straßenseiten-Einheitentyp, wobei ein Knoten des Graphen einer identifizierten regulären Basisstation oder einer Basisstation vom Straßenseiten-Einheitentyp entspricht, wobei Verbindungen des Graphen die regulären Basisstationen und eine Basisstation vom Straßenseiten-Einheitentyp verbinden,
- Bestimmen (S502) eines Zentralitätswerts für jeden Knoten des Graphen, wobei der Zentralitätswert für einen Knoten das Inverse der Summe des Abstands zwischen dem Knoten und allen anderen Knoten im Graphen ist,
- Bestimmen eines globalen Netzwerk-Zentralitätswerts,
- Prüfen (S503), ob eine Rekonfiguration einer Netzwerktopologie durchgeführt werden muss, wobei die Rekonfiguration der Netzwerktopologie gemäß den bestimmten Zentralitätswerten für jeden Knoten des Graphen und dem bestimmten globalen Zentralitätswert durchgeführt werden muss,
- Durchführen (S504) der Rekonfiguration der Netzwerktopologie durch Löschen von Verbindungen zwischen Basisstationen vom Straßenseiten-Einheitentyp und einer regulären Basisstation und durch Hinzufügen von Verbindungen zwischen Basisstationen vom Straßenseiten-Einheitentyp, wenn die Rekonfiguration der Netzwerktopologie durchgeführt werden muss.

**2.** Verfahren nach Anspruch 1, wobei das Verfahren durch eine Steuerung des heterogenen Netzwerks ultrahoher Dichte ausgeführt wird.

**3.** Verfahren nach Anspruch 1, wobei der globale Netzwerk-Zentralitätswert $F$ gemäß der folgenden Formel bestimmt wird:

$$F = \frac{\sum_{i=1}^{N}\left[max_V\big(C_D(i)\big) - C_D(i)\right]}{(N-1)(N-2)}$$

wobei $V$ die Gruppe der Basisstationen vom Straßenseiten-Einheitentyp ist, $C_D(i)$ die Anzahl von Knoten ist, die mit dem Knoten $i$ nur durch eine Verbindung verbunden sind, und $N$ die Anzahl von Knoten im Graph ist.

**4.** Verfahren nach Anspruch 1, wobei das Verfahren durch eine Steuerung des heterogenen Netzwerks ultrahoher Dichte und durch die Basisstationen vom Straßenseiten-Einheitentyp ausgeführt wird, der Zentralitätswert durch die Steuerung bestimmt wird und durch die Steuerung zu jeder Basisstation vom Straßenseiten-Einheitentyp zusammen mit Information transferiert wird, die die Basisstation vom Straßenseiten-Einheitentyp mit dem höchsten Zentralitätsmesswert identifiziert,
und die Rekonfiguration der Netzwerktopologie durch die Basisstation vom Straßenseiten-Einheitentyp gemäß dem empfangenen Zentralitätswert der Basisstation vom Straßenseiten-Einheitentyp durchgeführt wird.

**5.** Verfahren nach Anspruch 1, wobei das Verfahren durch eine Steuerung des heterogenen Netzwerks ultrahoher Dichte und durch die regulären Basisstationen und die Basisstationen vom Straßenseiten-Einheitentyp ausgeführt wird, die Schritte zum Erhalten, Identifizieren und Erstellen eines Graphen durch die Steuerung durchgeführt werden, die Schritte zum Prüfen und Durchführen der Rekonfiguration der Netzwerktopologie durch die regulären Basisstationen und die Basisstationen vom Straßenseiten-Einheitentyp durchgeführt werden, und wobei das Verfahren folgende weitere Schritte umfasst:

- Bestimmen von Führungstabellen durch die Steuerung,
- Transferieren der Führungstabellen zu den regulären Basisstationen und den Basisstationen vom Straßenseiten-Einheitentyp durch die Steuerung,
- Bestimmen des Zentralitätswerts basierend auf $C_D(v)$ durch jede reguläre Basisstation und die Basisstation vom Straßenseiten-Einheitentyp, wobei $C_D(v)$ die Anzahl von Knoten ist, die mit der regulären Basisstation oder der Basisstation vom Straßenseiten-Einheitentyp $v$ nur durch eine Verbindung verbunden sind,
- Bestimmen des globalen Netzwerk-Zentralitätswerts durch die regulären Basisstationen und Basisstationen vom Straßenseiten-Einheitentyp.

**6.** Verfahren nach Anspruch 1, wobei der globale Netzwerk-Zentralitätswert $F$ gemäß der folgenden Formel bestimmt wird:

$$F = \frac{max_{v \in V}\big(C_D(v)\big)}{N} - \frac{m}{N^2}$$

wobei $m = \sum_{v=1}^{N} C_D(v)$, $max_{v \in V}(C_D(v))$ das Maximum der Maß-Zentralitätswerte ist und $N$ die Anzahl von Knoten des Graphen ist.

**7.** System zum Konfigurieren eines heterogenen Netzwerks ultrahoher Dichte, das Basisstationen vom Straßenseiten-Einheitentyp, reguläre Basisstationen und Anwenderendgeräte umfasst, wobei die Basisstationen vom Straßenseiten-Einheitentyp eine schnellere Infrastrukturanwendung von Anwenderendgerät zu Anwenderendgerät oder zu Netzwerk als reguläre Basisstationen haben, **dadurch gekennzeichnet, dass** das System folgendes umfasst:

- Mittel zum Erhalten von Berichten über Funkmessungen von Anwenderendgeräten durch reguläre Basisstationen,

- Mittel zum Identifizieren, unter Verwendung der Berichte über Messungen, von regulären Basisstationen und Basisstationen vom Straßenseiten-Einheitentyp,
- Mittel zum Erstellen eines Graphen des heterogenen Netzwerks ultrahoher Dichte aus den identifizierten regulären Basisstationen und einer Basisstation vom Straßenseiten-Einheitentyp, wobei ein Knoten des Graphen einer identifizierten regulären Basisstation oder einer Basisstation vom Straßenseiten-Einheitentyp entspricht, wobei Verbindungen des Graphen die regulären Basisstationen und eine Basisstation vom Straßenseiten-Einheitentyp verbinden,
- Mittel zum Bestimmen eines Zentralitätswerts für jeden Knoten des Graphen, wobei der Zentralitätswert für einen Knoten das Inverse der Summe des Abstands zwischen dem Knoten und allen anderen Knoten im Graphen ist,
- Mittel zum Bestimmen eines globalen Netzwerk-Zentralitätswerts,
- Mittel zum Prüfen, ob eine Rekonfiguration einer Netzwerktopologie durchgeführt werden muss, wobei die Rekonfiguration der Netzwerktopologie gemäß den bestimmten Zentralitätswerten für jeden Knoten des Graphen und dem bestimmten globalen Zentralitätswert durchgeführt werden muss,
- Mittel zum Durchführen der Rekonfiguration der Netzwerktopologie durch Löschen von Verbindungen zwischen Basisstationen vom Straßenseiten-Einheitentyp und einer regulären Basisstation und durch Hinzufügen von Verbindungen zwischen Basisstationen vom Straßenseiten-Einheitentyp, wenn die Rekonfiguration der Netzwerktopologie durchgeführt werden muss.

**8.** Computerprogrammprodukt, das direkt ladbar in eine programmierbare Vorrichtung sein kann, umfassend Anweisungen oder Teilbereiche eines Codes zum Implementieren der Schritte des Verfahrens nach den Ansprüchen 1 bis 6, wenn das Computerprogramm auf einer programmierbaren Vorrichtung ausgeführt wird.

**Revendications**

**1.** Un procédé mis en œuvre par ordinateur pour configurer un réseau hétérogène ultra-haute densité comprenant des stations de base de type bord de route, des stations de base régulières et des terminaux d'utilisateurs, stations de base de type bord de route ayant des applications plus rapides entre terminaux d'utilisateurs ou entre terminal utilisateur et l'infrastructure réseau que les stations de base régulières, **caractérisé en ce que** le procédé comporte les étapes de :

- obtention (S500) de rapports de mesures radio des terminaux d'utilisateurs par l'intermédiaire de stations de base régulières,
- identification, à l'aide des rapports de mesures, de stations de base régulières et de stations de base de type bord de route,
- construction (S501) d'un graphe du réseau hétérogène à ultra haute densité à partir des stations de base régulières identifiées et des stations de base de type bord de route, un nœud du graphe correspondant à une station de base régulière identifiée ou une station de base de type bord de route, les liens du graphe reliant les stations de base régulières et les stations de type bord de route,
- détermination (S502) d'une valeur de centralité pour chaque nœud du graphe, la valeur de centralité d'un nœud étant l'inverse de la somme de la distance entre le nœud et tous les autres nœuds du graphe,
- détermination d'une valeur de centralité globale du réseau,
- vérification (S503) si une reconfiguration de la topologie du réseau doit être effectuée, dans laquelle la reconfiguration de la topologie du réseau doit être effectuée en fonction des valeurs de centralité déterminées pour chaque nœud du graphe et de la valeur de centralité globale déterminée,
- exécution (S504) de la reconfiguration de la topologie du réseau en supprimant les connexions entre les stations de base de type bord de route et la station de base régulière et en ajoutant des connexions entre les stations de base de type bord de route si la reconfiguration de la topologie du réseau doit être effectuée.

2. Procédé selon la revendication 1, **caractérisé en ce qu'**il est exécuté par un contrôleur du réseau hétérogène à ultra haute densité.

3. Procédé selon la revendication 1, dans lequel la valeur F de centralité globale du réseau est déterminée selon la formule suivante :

$$F = \frac{\sum_{i=1}^{N}[\max_V(C_D(i)) - C_D(i)]}{(N-1)(N-2)}$$

où V est l'ensemble de stations de base de type bord de route, $C_D(i)$ est le nombre de nœuds qui sont connectés au nœud i par un lien seulement et N est le nombre de nœuds du graphe.

4. Procédé selon l'une des revendications 1 à 3, **caractérisé en ce que** le procédé est exécuté par un contrôleur du réseau hétérogène ultra-haute densité et par les stations de base de type bord de route, la valeur de centralité est déterminée par le contrôleur et transférée par le contrôleur à chaque station de base de type bord de route, avec des informations identifiant la station de base de type bord de route ayant la métrique de centralité la plus élevée, et la reconfiguration de la topologie du réseau est effectuée par la station de base de type bord de route en fonction de la valeur de centralité reçue de la station de base de type bord de route.

5. Procédé selon la revendication 1, dans lequel le procédé est exécuté par un contrôleur du réseau hétérogène à ultra haute densité et par les stations de base régulières et les stations de base de type bord de route, les étapes d'obtention, d'identification et de construction de graphes étant réalisées par le contrôleur, les étapes de vérification et d'exécution de la reconfiguration de la topologie du réseau sont effectuées par les stations de base régulières et les stations de base de type bord de route, **caractérisé en ce que** le procédé comporte en outre les étapes de :

    - détermination, par le contrôleur, de tables de routage,
    - transfert, par le contrôleur, des tables de routage aux stations de base régulières et aux stations de base de type bord de route,
    - détermination, par chaque station de base régulière et les stations de base de type bord de route, de la valeur de centralité à partir de $C_D(v)$ où $C_D(v)$ est le nombre de nœuds qui sont connectés à la station de base régulière ou à la station de base de type bord de route v par un seul lien,
    - détermination, par chaque station de base régulière et les stations de base de type bord de route, de la valeur de la centralité globale du réseau.

6. Procédé selon la revendication 1, dans lequel la valeur F de centralité globale de réseau est déterminée selon la formule suivante :

$$F = \frac{\max_{v \in V}(C_D(v))}{N} - \frac{m}{N^2} \quad \text{où} \quad m = \sum_{v=1}^{N} C_D(v)$$

$\max_{v \in V}(C_D(v))$ est le maximum des valeurs de centralité et N est le nombre de nœuds du graphe.

7. Un système pour configurer un réseau hétérogène ultra-haute densité comprenant des stations de base de type bord de route, des stations de base régulières et des terminaux d'utilisateurs, stations de base de type bord de route ayant des applications plus rapides entre terminaux d'utilisateurs ou entre terminal utilisateur et l'infrastructure réseau que les stations de base régulières, **caractérisé en ce que** le système comporte :

- des moyens d'obtention de rapports de mesures radio des terminaux d'utilisateurs par l'intermédiaire de stations de base régulières,
- des moyens d'identification, à l'aide des rapports de mesures, de stations de base régulières et de stations de base de type bord de route,
- des moyens de construction d'un graphe du réseau hétérogène à ultra haute densité à partir des stations de base régulières identifiées et des stations de base de type bord de route, un nœud du graphe correspondant à une station de base régulière identifiée ou une station de base de type bord de route, les liens du graphe reliant les stations de base régulières et les stations de type bord de route,
- des moyens de détermination d'une valeur de centralité pour chaque nœud du graphe, la valeur de centralité d'un nœud étant l'inverse de la somme de la distance entre le nœud et tous les autres nœuds du graphe,
- des moyens de détermination d'une valeur de centralité globale du réseau,
- des moyens de vérification si une reconfiguration de la topologie du réseau doit être effectuée, dans laquelle la reconfiguration de la topologie du réseau doit être effectuée en fonction des valeurs de centralité déterminées pour chaque nœud du graphe et de la valeur de centralité globale déterminée,
- des moyens d'exécution de la reconfiguration de la topologie du réseau en supprimant les connexions entre les stations de base de type bord de route et la station de base régulière et en ajoutant des connexions entre les stations de base de type bord de route si la reconfiguration de la topologie du réseau doit être effectuée.

8. Produit programme d'ordinateur pouvant être chargé directement dans un dispositif programmable, comprenant des instructions ou des portions de code pour la mise en œuvre des étapes du procédé selon les revendications 1 à 6, lorsque ledit programme informatique est exécuté sur un dispositif programmable.

40 ~ Controller

10b ~ Core network

10a ~ Core network

30a ~ eNB RSU

15 ~ Local gateway

20a ~ Regular eNB

30b ~ eNB RSU

20c ~ Regular eNB

30d ~ eNB RSU

20e ~ Regular eNB

20b ~ Regular eNB

30c ~ eNB RSU

20d ~ Regular eNB

Fig. 1

Fig. 2

Fig. 3

Fig. 4

S500 — Collect measurements

S501 — Build a graph Of network

S502 — Determine centrality scores

S503 — Topology update ?

S504 — Network topology reconfiguration

S505 — Determine Network centrality

S506 — Network centrality correct ?

Fig. 5

Fig. 6a

Fig. 6b

S700 — Collect measurements

S701 — Build a graph Of network

S702 — Determine Routing tables

S703 — Transfer Routing tables

Fig. 7a

S750 — Receive Routing tables

S751 — Determine centrality scores

S752 — Determine global centrality

S753 — Topology update ?

S754 — Network topology reconfiguration

S755 — Determine Network centrality

S756 — Network centrality correct ?

Fig. 7b

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Views on LTE Rel-14. *3GPP draft; RP-151356*

- *Faster Betweenness Centrality Based on Data Structure Experimentation,* *http://www.sciencedirect.com/science/article/pii/S1877050913003463*